# EUROPEAN PATENT SPECIFICATION

(11) **EP 2 207 321 B1**
(45) Date of publication and mention of the grant of the patent: **23.05.2012**
(21) Application number: 08847163.6
(22) Date of filing: 24.10.2008
(51) Int. Cl.: H04L 12/46, H04L 29/08, H04L 29/12, H04L 29/06, H04L 12/28

(54) **AN ACCESSING METHOD, SYSTEM AND EQUIPMENT OF LAYER-3 SESSION**
ZUGANGSVERFAHREN, SYSTEM UND AUSRÜSTUNG EINER SCHICHT-3-SITZUNG
PROCEDE D'ACCES, SYSTEME ET EQUIPEMENT DE SESSION DE COUCHE 3

(30) Priority: 29.10.2007 CN 200710165461
(43) Date of publication of application: 14.07.2010
(73) Proprietor: Huawei Technologies Co., Ltd., Longgang District, Shenzhen Guangdong 518129 (CN)
(72) Inventor: YANG, Zhenting, Shenzhen Guangdong 518129 (CN)
(74) Representative: Pfenning, Meinig & Partner GbR
(86) International application number: PCT/CN2008/072830
(87) International publication number: WO 2009/059523

(56) References cited:
- EP-A1- 1 628 458
- WO-A2-02/078253
- CN-A- 1 492 650
- CN-A- 1 513 253
- CN-A- 1 780 294
- CN-A- 1 917 466
- US-A1- 2003 163 577
- US-A1- 2007 110 072
- LAU J ET AL: "Layer Two Tunneling Protocol - Version 3 (L2TPv3); rfc3931.txt" IETF STANDARD, INTERNET ENGINEERING TASK FORCE, IETF, CH, 1 March 2005 (2005-03-01) , XP015009703 ISSN: 0000-0003
- DSL FORUM: "Migration to Ethernet-Based DSL Aggregation" INTERNET CITATION April 2006 (2006-04), XP002411174 Retrieved from the Internet: URL:http://www.dslforum.org/techwork/tr/TR -101.pdf [retrieved on 2006-12-11]
- H. Miclea: "The evolution from PPPoE to IPoE sessions" SWINOG 15, Bern, CH 4 December 2007 (2007-12-04), XP002607324 Retrieved from the Internet: URL:http://www.swinog.ch/meetings/swinog15 /The_Evolution_from_PPPoE_to_IPoE_sessions .pdf [retrieved on 2010-10-27]

## Description

### FIELD OF THE INVENTION

The present invention relates to communication field, and more specifically, to a method, system and apparatus for accessing a layer-3 session.

### BACKGROUND

Virtual Private Dial Network (VPDN) employs a dial-up function of public network for realizing Virtual Private Network, so as to provide enterprises, small Network Service Providers (NSP), and those in mobile offices with an access service. The VPDN establishes a safe private network for an enterprise in public network using a private network encryption communication protocol. Regional offices and personnel on business of the enterprise may connect with the enterprise's headquarters over the public network via a virtual encryption tunnel; whereas other users in the public network cannot pass through the virtual tunnel for accessing internal resources within an intranet.

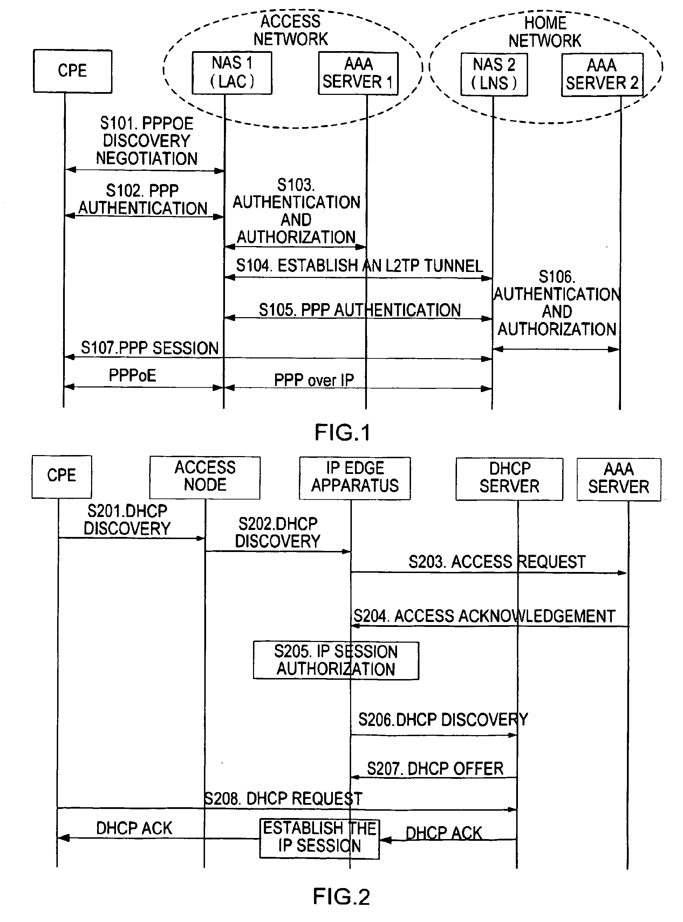

Currently, the most popular practice is a mechanism of Layer Two Tunneling Protocol (L2TP). For example, US patent application, No 2003/163577A1, relates to a security system for accessing a private network service based on L2TP. LAU J ET AL: "Layer Two Tunneling Protocol-Version 3 (L2TPv3);rfc3931.txt"IETF, published on March 1. 2005, introduces a third version of the Layer Two Tunneling Protocol which defines the base control protocol and encapsulation for tunneling multiple Layer 2 connections between two IP nodes. The access procedure of Point to Point Protocol (PPP) via the L2TP is illustrated as Figure 1. The access procedure includes steps as follows.

Step s101: A remote user initiates a PPP over Ethernet (PPPoE) call using a Customer Premises Equipment (CPE) at a client embedded with PPPoE. The CPE negotiates with a Broadband Network Gateway (BNG), a Network Access Server (NAS) in an access network such as a Broadband Remote Access Server (BRAS), e.g., an L2TP Access Concentrator (LAC) apparatus, for establishing a PPPoE session.

Step s102: The CPE initiates a PPP authentication to a device, NAS 1, in the access network.

Step s103: The NAS 1 in the access network requests an Authentication, Authorization and Accounting (AAA) server in the access network for an access authentication and authorization, and acquires information of a user's home network, e.g., an address of NAS 2 of the user's home network, an IP address of an L2TP Network Server (LNS) for example.

Step s104: The NAS (LAC) 1 establishes an L2TP tunnel with the NAS 2 (LNS) of the user's home network.

Step s105: The NAS 1 sends PPP authentication information of the user to the NAS 2 (LNS) via an L2TP message for authenticating the user.

Step s 106: The NAS 2 requests the AAA server 2 of the user's home network for the access authentication and authorization on the user.

Step s107: The authentication performed by the AAA server 2 is successful, and the user is thereby authorized for accessing the network via the tunnel, and then the NAS 2 establishes a PPP session and an L2TP session. Thus, the user accesses the network via the PPP session, and employs the service.

Since the access approach of the PPP session itself has lots of limitations, a new access mechanism of Layer-3 (e.g., IP) Session becomes a trend for future development. The IP Session represents a connection session accessed via a network in association with a user's IP address. The IP Session peers the PPP session, and is a session based on IP. Furthermore, the IP Session is usually terminated at an IP edge apparatus or an NAS (BNG/BRAS) apparatus, i.e., the IP Session is a session connection established between the user equipment and the IP edge apparatus. The IP address assigned to the access session is essential to identify the IP Session. Moreover, the IP address is usually assigned dynamically by the Dynamic Host Configuration Protocol (DHCP) server, and the IP Session is utilized by the network for managing the user access to the network, e.g., accounting, etc.

In the conventional arts, the procedure for generating the IP Session based on the DHCP is illustrated as Figure 2. The procedure includes steps as follows.

Step s201: A DHCP client sends a DHCP Discovery message.

Step s202: An Access Node (AN) embedded with DHCP relay function senses the DHCP Discovery message, inserts access location information into the message, and then forwards the message to an IP edge apparatus embedded with DHCP relay/proxy AAA client function.

Step s203: The IP edge apparatus sends an access request to the AAA server.

Step s204: The AAA server sends an access acknowledgement to the IP edge apparatus.

Step s205: The IP edge apparatus authorizes the IP Session.

Step s206: The IP edge apparatus sends the DHCP Discovery message to the DHCP server.

Step s207: The DHCP server returns a DHCP Offer message to the IP edge apparatus.

Step s208: The DHCP client sends a DHCP request message to the DHCP server.

Step s209: The DHCP server returns a DHCP acknowledgement (Ack) message to the DHCP client. Thus, the IP session is established.

Other related conventional arts are also provided. For example, EP 1628458A1 is directed to a method for transmission of IP packets between customer networks and IP provider networks using an access network, in particular, a network element of the access network has the following steps: creation of a level 2 connection between provider network and customer network using a customer IP address; creation of a service connection; allocation of an active IP session and; transmission of IP packets between active IP sessions of service connections. WO 2002/078253A2 is directed to an access network using Layer 2 transmission protocol between a LAC and LSN. DSL Forum "Migration to Ethernet-Based DSL Aggregation", published on April 2006, discusses a method to enable an as smooth as possible migration process from an ATM based aggregation network to an Ethernet based aggregation network.

In implementing the present invention, the inventor discovers that the conventional arts have below defeats: No VPDN access method is proposed according to the IP access session.

### SUMMARY

A method, a system and an apparatus for accessing a Layer-3 session is provided according to embodiments of the present invention, where a unified Layer-3 session for accessing is proposed to address the issue of an interconnection between the Layer-2 link technique of the access network and that of the home network of the user.

A Layer-3 based session access method for Virtual Private Dial Network, VPDN, is provided according to one aspect of the present invention. The method includes the following steps:
establishing, by a session access concentrator (SAC) in an access network of a user, an access session with a remote system;
establishing, by the SAC, a Session Transport Protocol (STP) session with a session network server (SNS) in home network of the user;
establishing, by the SAC, a mapping relation between the access session of the remote system and the STP session, wherein the mapping relation establishing step further comprises establishing the mapping relation of an access session ID of the remote system, and/or a link layer or physical layer ID of the access session, to an STP tunnel, and an STP session ID; and forwarding, by the SAC, messages between the remote system and the SNS according to the mapping relation.

A system for accessing a Layer-3 session is also provided according to another aspect of the present invention. The system includes a remote system and a session access concentrator (SAC):
the remote system is in an access network of a user, and is configured to establish an access session with a remote system; establish a Session Transport Protocol (STP) session with a session network server (SNS) in home network of the user; establish a mapping relation between the access session of the remote system and the STP session, and forward messages between the remote system and the SNS according to the mapping relation.

Compared with the conventional art, the embodiments of the present invention at least enjoy the below advantages.

According to the embodiments of the present invention, application scenarios of the IP session are extended, so that the problem of technique limitations on the IP session concerning a VPDN and a wholesale scenario is solved.

### BRIEF DESCRIPTION OF THE DRAWINGS

Figure 1 illustrates a schematic view of a procedure for accessing via the L2TP by the PPP in the conventional arts;
Figure 2 illustrates a schematic view of a procedure for generating an IP Session based on the DHCP;
Figure 3 illustrates a system architecture of an STP mechanism for implementing a Layer-3 session access according to an embodiment of the present invention;
Figure 4 illustrates a schematic view of an STP protocol framework according to an embodiment of the present invention;
Figure 5 illustrates a schematic view of protocol stacks in VPDN or wholesale mechanism concerning a Layer-3 session access approach according to an embodiment of the present invention;
Figure 6 illustrates a schematic view of an encapsulation format of an STP protocol stack according to an embodiment of the present invention;
Figure 7 illustrates a schematic view of another encapsulation format of an STP protocol stack according to an embodiment of the present invention;
Figure 8 illustrates a flowchart for establishing an IP session using the STP by a session access concentrator (SAC) that acts in PROXY mode according to a first embodiment of the present invention;
Figure 9 illustrates a flowchart for establishing an IP session using the STP by an SAC that acts in RELAY mode according to an embodiment of the present invention;
Figure 10 illustrates a flowchart for establishing an IP session across an access network via the DHCP;
Figure 11 illustrates a processing flowchart in which the STP supports an extension on a lease of IP session address according to an embodiment of the present invention;
Figure 12 illustrates a flowchart for processing an ARP request by the SAC and the SNS respectively;
Figure 13 illustrates a flowchart in which the SNS periodically sends a detection message;
Figure 14 illustrates a flowchart in which the SAC periodically sends a detection message;
Figure 15 illustrates a flowchart for processing a message from the remote system received by the SAC; and
Figure 16 illustrates a flowchart for processing a message from the STP tunnel received by the SAC.

### DETAILED DESCRIPTION

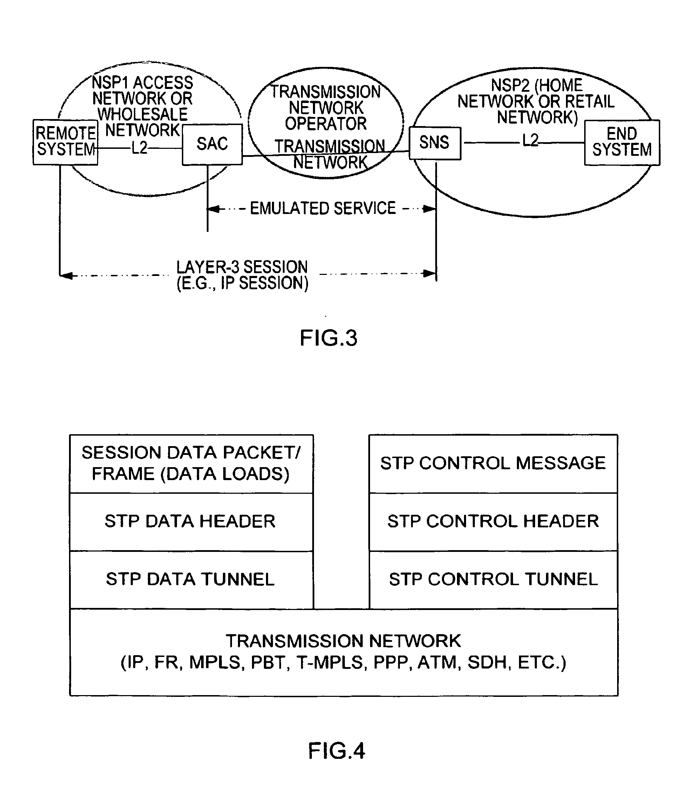

According to embodiments of the present invention, the user may cross an access network via a Layer-3 access session and thus access a home (subscription) network of the user using a Session Transport Protocol (STP) mechanism. A system architecture of the STP mechanism for implementing a Layer-3 session access according to an embodiment of the present invention is illustrated in Figure 3. The system architecture at least includes a Host System, a Session Access Concentrator (SAC), a session network server (SNS).

The host system at least includes one of a Remote System, an End System, and a network server. The Remote System includes a terminal apparatus of a remote user, including apparatus such as a CPE, a Residential Gateway (RG), a personal computer, a wireless terminal, etc. The End System includes a terminal apparatus of a local (within a home network for example) user, including: a CPE, an RG, etc. The network server includes an Authorization, Authentication and Accounting (AAA) server, a Dynamic Host Configuration Protocol (DHCP) server, etc.

The SAC is an edge apparatus of the access network, e.g., a network access server (NAS) or an IP edge apparatus, including apparatus such as a network service router, a network access gateway, a BNG, a BRAS, an LAC, etc. The SAC belongs to the access network. The SAC and the remote system may connect with each other using Layer-2 (L2) link technology, e.g., Ethernet technology, Provider Backbone/Backhaul Transport (PBT) technology, Multi-Protocol Label Switch (MPLS) technology, etc. The SAC is responsible for establishing a Tunnel with the SNS of the user's home network, and forwarding messages (including data messages and control messages) transmitted between the SNS and the remote system of the user, for example, mapping and encapsulating a message received from the remote system based on the STP protocol and sending to the SNS, mapping a message received from the SNS and sending to the remote system.

The SNS is a peer end apparatus of the SAC, including network apparatus such as a network service router, a network access gateway, a BNG, a BRAS, an LNS, etc., and is a logic end at the network side for an access session (e.g., an IP session) of the remote system. Moreover, the SNS is responsible for controlling and managing an access session of the user, and is also responsible for establishing a tunnel with the access network for transmitting data of the user.

The SAC and the SNS are connected via a transmission network, each of which is an STP peer end of the other. In other words, if the SAC is an STP local end apparatus, the SNS is thus an STP peer end apparatus, and vice versa. The STP protocol is run between the SAC and the SNS. An emulated service tunnel is established in the transmission network, where the transmission network includes an IP network, an Ethernet network, an Asynchronous Transfer Mode (ATM) network, a Synchronous Digital Hierarchy (SDH) network, a Wavelength Division Multiplexing (WDM) network, an MPLS network, etc. The emulated service tunnel between the SAC and the SNS may be statically deployed, or may also be triggered according to an indication of the access session and thereby be dynamically established.

According to the embodiment of the present invention, the STP mechanism is run between the SAC and the SNS, and protocols specified by a Request For Comment (RFC) may be employed for a specific implementation of the STP, e.g., an L2TP protocol, an LDP protocol, a PW signaling protocol, etc.

There are two types of connections between an SNS and SAC pair. One is a tunnel connection, where an SNS and SAC pair is defined. The other one is a Session connection, which is multiplexed over the tunnel connection and configured to represent each Layer-3 session (e.g., an IP session) procedure carried over the tunnel connection. A plurality of STP tunnels may be established between one SAC and SNS pair, where the tunnel is formed by one control connection and one or a plurality of sessions. The session should be connected after the establishment of the tunnel (including an exchange of information such as ID security, version, frame type, hardware transmission type, etc.) is successful, where each session connection corresponds to a Layer-3 protocol (IP) data flow between the SAC and the SNS: Control messages and Layer-3 (IP) data packets are all transmitted via the tunnel. Hello message is used by the STP for detecting the connectivity of tunnel. The SAC and the SNS periodically send the Hello message to the peer end. If no acknowledgement concerning the Hello message has been received during a period of time, the tunnel would be torn down.

There are two types of messages in the STP, i.e., control message and data message. The control message is used for the establishment, the maintenance of tunnel and/or the session connection as well as the transmission control; whereas the data message is configured to encapsulate Layer-3 data packets or frames (data loads, e.g., IP packets for communication between the remote system and the end system within the home network), and to transmit over the tunnel. The transmission of the control message may be a reliable transmission, and may support a flow control and a congestion control for the control message; whereas the transmission for the data message may be an unreliable transmission, e.g., no retransmission is performed when the data message is dropped off, and may not support a flow control and a congestion control for the data message. STP data and control channel refer to a logical concept, not always an actual transmission tunnel or path, but an information transmission mechanism, e.g., indicative of a reliable or unreliable channel.

Referring to Figure 4, an STP protocol framework is illustrated according to an embodiment of the present invention. The STP control message and the STP data message may use a similar message header, e.g., an STP data header or an STP control header, where the control message and the data message are identified via the message header. The STP data header or the STP control header may contain information of a Tunnel ID or a Session ID for identifying different tunnels and sessions. Messages with a same Tunnel ID but a different Session ID will be multiplexed over one tunnel. The STP data header or the STP control header may be a logical header, i.e., an actual data field between a session data packet (frame) or an STP control message and the tunnel may not be existent; instead, actual information data may be contained in a session data packet (frame) or in an STP control message.

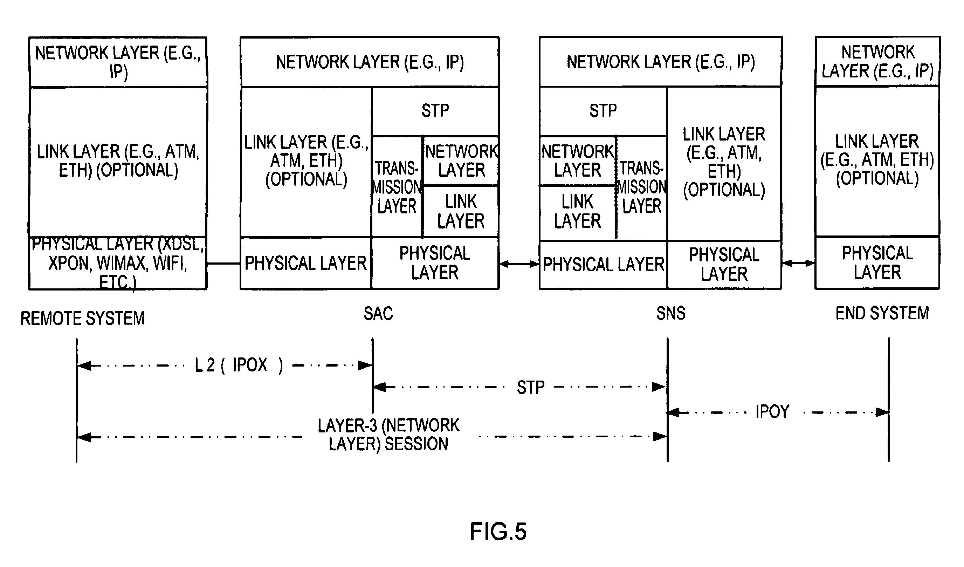

Referring to Figure 5, a schematic view of protocol stacks in VPDN or wholesale mechanism concerning a Layer-3 session access approach according to an embodiment of the present invention is provided, where protocol stacks on each core apparatus in the VPDN or the wholesale mechanism of the Layer-3 session access method are illustrated. The access network section between the remote system and the SAC, the transmission tunnel network section between the SAC and the SNS, and the home network section between the SNS and the end system may use a different Layer-2 link or physical layer link, but use a same Layer-3 network, e.g., an IP network.

Layer-3 session (IP session) data (IP packet loads) may be carried using a Layer-2 link technology or be directly carried over the physical link by the remote system, e.g., IP over Ethernet (IPoE) or IP over WDM (IPoWDM) messages, and then be sent to the SAC via the physical link; or Layer-3 session data from the SAC is received, e.g., IPoE messages containing the IP packet loads.

The SAC receives a message from the remote system, and conducts a termination process regarding the link layer or the physical layer, including: obtaining an ID of the Layer-2 link or the physical link, removing a Layer-2 link header from the data message, extracting the Layer-3 session data packet or frame (IP packet loads) of the remote system. Next, the SAC maps (corresponds) to an STP tunnel and/or an STP session connection based on the header information of the Layer-3 session data packet or frame, and/or the ID of the Layer-2 link or the physical link. Then, an STP mapping and adaption (e.g., a classification of the control message or the data message, and the STP adaption) is performed on the Layer-3 session data packet or frame (IP packet loads), including adding an STP message header, and sending via the STP tunnel, where the sending via the STP tunnel includes adapting transmission tunnel header, and then sending via the physical layer. The STP transmission tunnel includes an IP tunnel, a PBT tunnel, an MPLS tunnel, an SDH tunnel, etc.

The SAC receives an STP message from the SNS via the STP tunnel, and first conducts a tunnel termination process, including obtaining tunnel and/or session connection information. The SAC then removes a tunnel header from the message; next, the STP message is classified based on the STP message header. If it is an STP control message, the STP control message is processed locally at the SAC, or transferred to a dedicated apparatus for processing the STP control message or to the remote system for processing the STP control message. If it is an STP data message, the SAC may obtain the Layer-3 session (IP session) data packets (IP packets of data loads), next, obtain an ID of the Layer-2 link or the physical link connected between the SAC and the remote system based on the STP session ID (e.g., a destination IP address for IP packets of data loads), and then, conduct an adaption and encapsulation concerning the link layer or the physical layer, send to the remote system afterward.

The SAC receives a message from the SAC via the STP tunnel, and first conducts a tunnel termination process, including obtaining tunnel and/or session connection information. The SNS then removes a tunnel header from the message; next, the message is classified based on the STP message header. If it is an STP data message, e.g., an STP data message header is present therein, the message header is removed and data loads are obtained. Next, the STP data message is sent based on a destination address (a destination IP address) of the data loads. If it is an STP control message, the STP control message is sent to a corresponding apparatus for processing, based on the message type, e.g., sent to an AAA server via RADIUS for processing, or sent to an address server (DHCP server) via a DHCP message for processing.

The SNS receives a message from other end systems within the network, obtains IP packet loads of the message, and maps (corresponds) a destination address (e.g., an IP address) of the IP packet loads to the STP tunnel, next, conducts an STP adaption for the Layer-3 data packet or frame (IP packet loads), including adding an STP message header and sending via the STP tunnel.

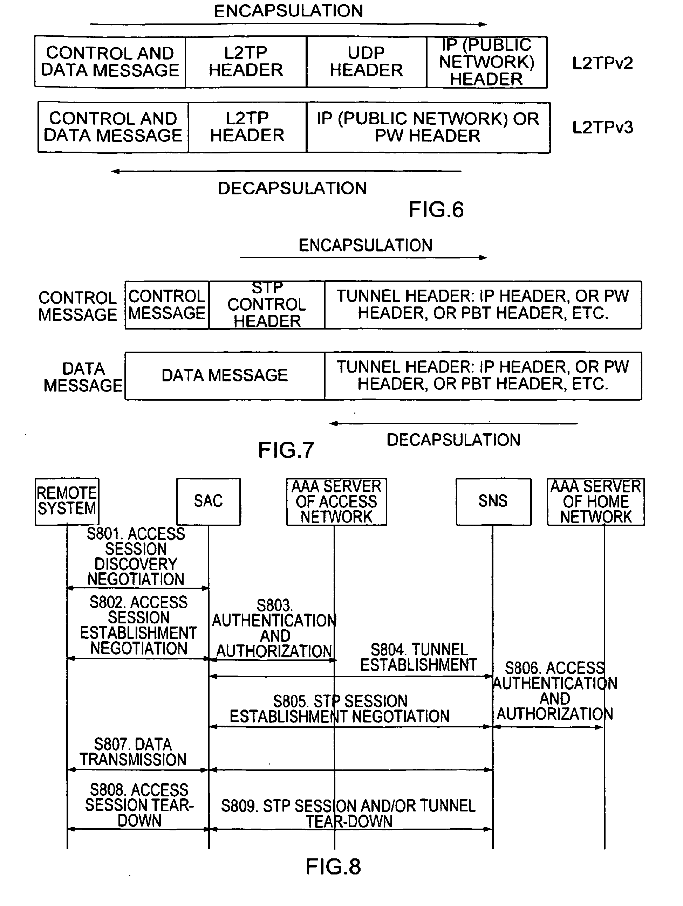

Referring to Figure 6, an encapsulation format of an STP protocol stack according to an embodiment of the present invention is illustrated. The present embodiment illustrates an encapsulation performed by the STP using the existing L2TP V2 and V3. The Layer-3 message of the session is an IP message, and the user may access via an IP session. The control message and the data message of the STP may be encapsulated a similar or an identical L2TP format. The STP message type may be identified based on an L2TP header, where, for detailed L2TP header, reference may be made to RFC 2661 and RFC 3931. The control message and data loads are directly encapsulated at the L2TP header, where the data loads includes an IP message. A UDP header domain and an IP (public network) header domain refer to the tunnel header in terms of the L2TP V2, while an IP (public network) header domain or a PW header domain of the message refer to the tunnel header in terms of the L2TP V3.

For the encapsulation in terms of the L2TP V3, the data message may be stored inexplicitly at the L2TP header. In other words, no actual data field exists between the Layer-3 message and the tunnel header. The data message and the control message are identified based on a predetermined control message header. For example, a first 32 bits data (4 successive bytes) in the L2TP header of the control message may be zero. That is, the message is a control message when the first 32 bits data of the message are zero after the tunnel header is removed; otherwise, the message is a data message when the first 32 bits data of the message are not zero. Since the Layer-3 message is encapsulated directly at the L2TP header of the tunnel header, this may significantly accelerate the message efficiency and may support a heterogeneous network of the access network and the home network.

Referring to Figure 7, another encapsulation format of an STP protocol stack according to an embodiment of the present invention is illustrated. Since the data loads of the data message may carry a session ID, e.g., an IP address for the data loads of the IP session, the data message is therefore directly encapsulated in the transmission tunnel, and the STP control message is transmitted over the tunnel after an STP control message header is added and encapsulated therein.

The control message and the data message may be identified based on a related domain of the tunnel header, e.g., a protocol field at the IP header of the IP tunnel (a protocol number of the IP header), a type field and/or a service label field at a PBT header of a PBT tunnel, a PW header label and/or a Control word field of the PW tunnel. The data message and the control message of the STP may also be identified based on a predetermined STP control header. For example, a first 32 bits data in the STP header of the control message may be zero. That is, the message is a control message when the first 32 bits data of the message are zero after the tunnel header is removed; otherwise, the message is a data message when the first 32 bits data of the message are not zero (since the first 32 bits data of a normal IP message will not be zero). A header of the STP control message may be in a format similar to that of the L2TP control message header, which depends on a specific implementation.

During the establishment of an IP session by the STP according to the embodiment of the present invention, the SAC may function in two modes, i.e., a PROXY mode, or a RELAY mode. The PROXY mode is usually applied both in a scenario for establishing a dynamic VPN (VPDN) and in a wholesale scenario, whereas the RELAY mode is usually applied in a wholesale scenario. The difference between the PROXY mode and the RELAY mode lies in that the message is processed in a different manner during a discovery stage of the session access associated therewith. For the PROXY mode, the SAC proxy acts as a proxy for the SNS to perform an interaction negotiation with the remote system at a discovery stage during the establishment procedure for the access session, in this way, the SAC acts some part of SNS functions. For the RELAY mode, the SAC directly forwards an interaction message at a discovery stage during the establishment procedure from the remote system to the SNS for processing, and then the SAC forwards to the remote system a message from the SNS in response to the remote system. When the IP session access is used in combination of a PANA, a procedure for configuring a first address may be regarded as a discovery stage when the PANA is accessed. When the PANA is adopted by the remote system, the SAC in the PROXY mode is responsible for assigning a temporary address to the remote system.

The first embodiment of the present invention includes a procedure for establishing an IP session using the STP by the SAC that acts in the PROXY mode. Referring to Figure 8, the following steps are included.

Step s801: The remote system negotiates with the SAC for discovering an access session. The remote system discovers a network access server through the discovery negotiation procedure, where the network access server provides the remote system with an access service. The SAC in the PROXY mode acts for the SNS to conduct a negotiation with the remote system for discovering an access session, i.e., the SAC may act for the SNS to respond to a message of the access discovery negotiation sent by the remote system. For example, the remote system sends a DHCP Discovery/Solicit message, and the SAC may respond a DHCP Offer/Advertise message. The remote system sends a PANA-Client-Initiation message of the PANA, and the SAC may respond a PANA-Auth-Request message of the PANA. The remote system sends an EAPoL Start message over 802.1x. The SAC may respond an EAPoL Request/ID message. The discovery negotiation procedure for the access session is optional, and is also associated with a specific negotiation mechanism. For example, when the remote system is accessing via the PANA, the temporary address acquiring procedure regarding the remote system may be the discovery negotiation procedure for the access session, i.e., the SAC may assign a temporary address for the remote system over the DHCP.

Step s802: The remote system negotiates with the SAC for establishing an access session. The remote system negotiates with the network access server for establishing an access session, i.e., the remote system negotiates with the SNS for establishing an access session. Since the remote system and the SNS locate in different networks where no direct interconnection can be conducted, a relay of the SAC is required for the negotiation between the remote system and the network access server. The negotiation for establishing the access session includes an ID authentication, an address assignment, a link negotiation, a session establishment, etc. The remote system sends a negotiation message for establishing an access session. The message includes a DHCP Request/Auth (authentication) message, or a PANA-Auth-Request/ PANA-Auth-Answer message of the PANA, or an EAPoL Response message over 802.1 x, etc.

Step s803: The SAC acquires ID information of the remote system, e.g., an account name, a link ID, etc., based on the message of the negotiation for establishing the access session sent by the remote system. The SAC then performs an ID authentication and authorization on the remote system based on the ID information. For example, a Radius message is sent to an AAA server of the access network, the AAA server of the access network may perform the authentication and authorization successfully, and respond to the SAC, a response message which may carry information of the home network, e.g., tunnel information (e.g., an IP address for the peer end).

Step s804: The SAC negotiates with the SNS for establishing an STP tunnel. If there is no tunnel established or no idle tunnel between the SAC and the SNS, the SAC may negotiate with the SNS for establishing an STP tunnel, e.g., establishing an L2TP tunnel via the L2TP, establishing an MPLS or a PW tunnel via the LDP, establishing a PBT tunnel via the PBT signaling, or establishing an IPSec tunnel, etc. The tunnel may be established in a dedicated mechanism that may not belong to an STP protocol. The STP tunnel may be configured statically, e.g., the SAC may be configured on the STP tunnel of the SNS via network management.

Step s805: The SAC negotiates with the SNS for establishing a session. The SAC negotiates with the SNS for STP session establishment, maintenance, and tear-down via a control message for negotiating the STP session. The SAC is responsible for mapping the negotiation message for establishing the access session sent from the remote system to an STP session negotiation control message, and then sending to the SNS over the STP tunnel. The control message for negotiating the STP session includes an Incoming-Call-Request (ICRQ) message, an Incoming-Call-Reply (ICRP) message, an Incoming-Call-Connected (ICCN) message, an Outgoing-Call-Request (OCRQ) message, an Outgoing-Call-Reply (OCRP) message, and an Outgoing-Call-Connected (OCCN) message over the L2TP protocol.

Step s806: The SNS conducts an ID authentication and authorization on the remote system. The SNS acquires ID information of the control message for negotiating the STP session from the remote system, and conducts an ID authentication and authorization on the remote system based on the ID information. When the authentication and authorization conducted by the AAA server is passed, a response to the SNS is sent, where the response message may carry a session ID, e.g., an IP address, of the Layer-3 access session of the remote system.

The SNS specifies an STP session ID and an access session ID of the remote system, and also establishes a mapping relation between the access session ID of the remote system, the tunnel, and the STP session ID, and then responds to the SAC via an STP session negotiation control message. Preferably, the STP session ID may use the same ID as the access session of the remote system, e.g., an IP address. The SAC establishes an STP session based on the received STP session negotiation control message, and also establishes a mapping relation between the STP session and the remote system, e.g., establishing a mapping relation of the access session ID of the remote system (e.g., an IP address) and/or a link layer or physical layer ID of the access session, to the tunnel, and the STP session ID. The link layer or physical layer ID of the access session includes an interface ID, a VLAN ID, a PVC, an MAC address, a PBT link, etc. The SAC responds to the remote system via a negotiation message for establishing the access session, indicating that the access session has been established, e.g., the SAC may respond to the remote system via a DHCP ACK message.

Step s807: A data communication (data is transmitted via the access session) is performed between the remote system and apparatus within the home network. The SAC is responsible for forwarding a message between the SNS and the remote system of the user, encapsulating the message received from the remote system based on the STP protocol and sending to the SNS, and decapsulating the message received from the SNS and sending to the remote system. The SNS receives a Layer-3 data message from other end systems within the network. The SNS then maps a destination address (e.g., IP address) of the message to the STP tunnel, performs an STP adaption on Layer-3 data packets (frames), including adding an STP message header and sending to the remote system via the STP tunnel.

Step s808 and step s809: The session is torn down. The session tear-down includes a tear-down of the access session initiated by the remote system, and a tear-down of the session triggered by the SNS or the SAC. For example, the remote system may send a DHCP release message, a 802.1x EAPOL logoff message, etc. The SAC and the SNS tear down the STP session, and delete the mapping relation between the access session and the STP session. If the session torn down is the last session over the STP tunnel, the SAC and the SNS may tear down the STP tunnel that is dynamically established.

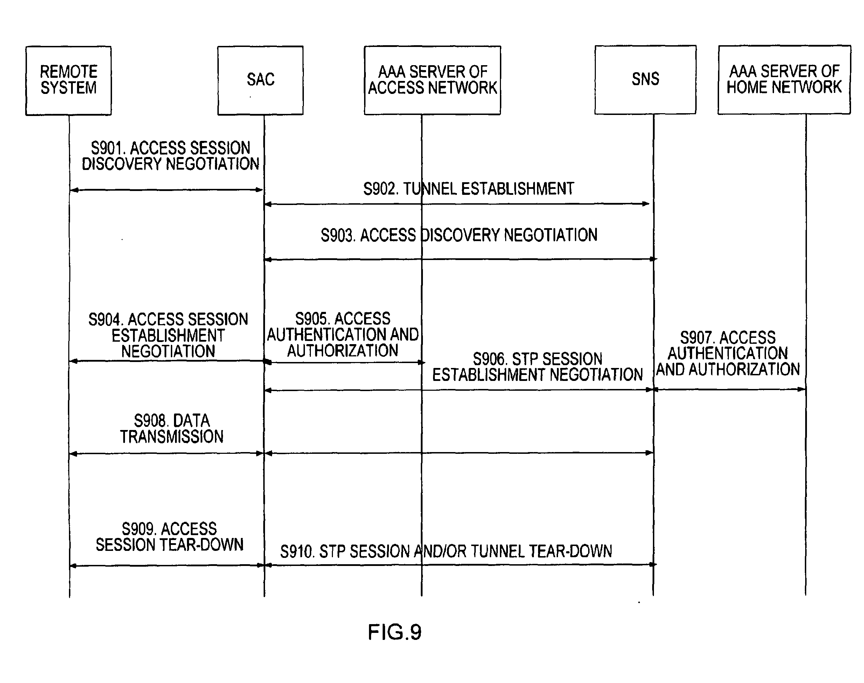

The second embodiment of the present invention illustrates a procedure for establishing an IP session using the STP by the SAC that acts in the RELAY mode. Referring to Figure 9, the following steps are included.

Step s901: A negotiation for discovering an access session is performed. The remote system discovers a network access server through the discovery negotiation procedure, where the network access server provides the remote system with an access service. The SAC in the RELAY mode forwards a message of the access discovery negotiation sent by the remote system to the SNS. The SAC converts the negotiation message for discovering the access session sent by the remote system into a negotiation message for discovering an STP access, and converts the negotiation message for discovering an STP access into a negotiation message for discovering the access session. The message of an STP access discovery negotiation includes an Incoming-Call-Request (ICRQ) message, an Incoming-Call-Reply (ICRP) message, an Incoming-Call-Connected (ICCN) message, an Outgoing-Call-Request (OCRQ) message, an Outgoing-Call-Reply (OCRP) message, an Outgoing-Call-Connected (OCCN) message, and a Set-Link-Info (SLI) message over the L2TP protocol.

Step s902: If there is no tunnel established or no idle tunnel between the SAC and the SNS, the SAC may negotiate with the SNS for establishing an STP tunnel.

Step s903: The SAC negotiates with the SNS for an access discovery.

Step s904: The remote system initiates a negotiation with the SAC for establishing an access session. The remote system negotiates with the network access server for establishing an access session, where the negotiation for establishing the access session includes an ID authentication, an address assignment, a link negotiation, a session establishment, etc.

Step s905: The SAC conducts an ID authentication and authorization on the remote system via an AAA server or a policy server of the access network.

Step s906: The SAC negotiates with the SNS for establishing an STP session.

Step s907: The SNS conducts an ID authentication and authorization on the remote system via an AAA server or a policy server of the home network. The foregoing step s905 and step s907 are optional.

Step s908: A data communication (data is transmitted via the access session) is performed between the remote system and apparatus within the home network. The SAC is responsible for forwarding a message between the SNS and the remote system of the user.

Step s909 and step s910: The session is torn down. The session tear-down includes a tear-down of the access session initiated by the remote system, and a tear-down of the session triggered by the SNS or the SAC.

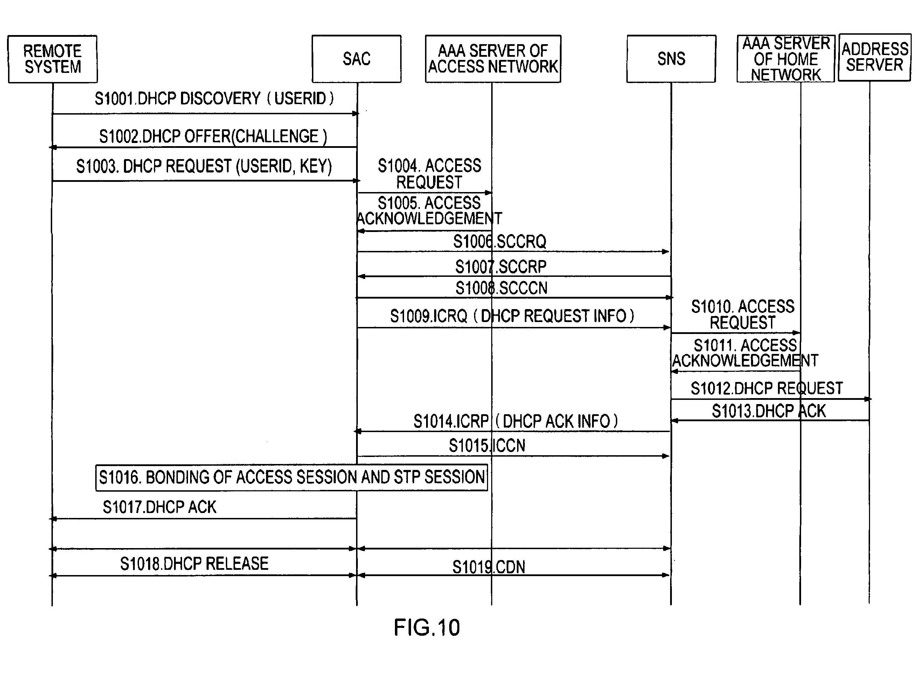

The third embodiment of the present invention illustrates a flowchart for establishing an IP session across an access network via the DHCP, where the existing L2TP protocol is utilized by the STP. Referring to Figure 10, the following steps are included.

Step s1001: The remote system initiates an establishment of an IP session. The remote system may thus access the home network via the IP session across the access network. The remote system then initiates a DHCP Discovery message, where the DHCP Discovery may include ID information (UserID) of the remote system. The ID information includes identifications of apparatus and ports connected with the remote system and carried in Option 82. The ID information may also include a user's account name or an MAC address of a host in the remote system, etc.

Step s1002: The SAC in the PROXY mode receives the DHCP Discovery message from the remote system, identifies a link ID of the DHCP Discovery message, including an interface ID, a VLAN ID, a PVC ID of the message, etc., and also parses this messages to acquire the ID information. Next, the SAC determines that the home network of the access session to be established by the remote system is not the local network, based on the link ID and/or the ID information, and then acquires information of the home network to be accessed by the remote system (e.g., an address of the DHCP server of the home network to be accessed by the remote system), responds to a DHCP Offer message or an AUTH (authentication) message from the remote system. Specifically, the address of the DHCP server carried in the DHCP Offer message may be the address of the DHCP server in the home network of the access session to be established by the remote system, for example. If a user's account name is carried in the received DHCP Discovery message, the SAC may specify a Challenge value, and inform the remote system of the Challenge value via the DHCP Offer message. The SAC specifies a source MAC address for sending the DHCP Offer message by the SAC, where the MAC address may be an address of the SAC apparatus, or, may be a virtual MAC address specified by the SAC. The remote system is informed of an authentication via the DHCP AUTH (authentication) message, where a mechanism of DHCP bearing EAP may be adopted for the authentication message.

Step s1003: The remote system continues to request for establishing an IP session. The remote system initiates a DHCP Request or AUTH (authentication) message, where the DHCP Request or AUTH (authentication) message may include ID information. The ID information further includes key information, where the key information includes a key encrypted with the Challenge value.

Step s1004: The SAC receives the DHCP Request or AUTH (authentication) message initiated by the remote system, acquires a link ID and ID information of the message, and then authenticates and authorizes the access network. The SAC sends an authentication request message (Access Request) to an AAA server of the access network, requesting the authentication and authorization, where the authentication request message may include the ID information.

Step s1005: The authentication and authorization performed by the AAA server of the access network is successful, the AAA server may then respond a successful message of the authentication and authorization (Access Accept) to the SAC. The AAA server may also send authorization data to the SAC, including information of the home network, e.g., parameters of the tunnel between the SAC and the SNS, etc.

Step s1006: The SAC determines that an establishment of a transmission tunnel is required (e.g. no tunnel to the SNS exists, or the existing tunnel is full of sessions), and therefore the SAC initiates a request for establishing a tunnel to the SNS, e.g., the SAC initiates a Start-Control-Connection-Request (SCCRQ) message.

Step s1007: The SNS responds to the request for establishing the tunnel, and sends a response message, Start-Control-Connection-Reply (SCCRP).

Step s1008: The SNS confirms the establishment of the tunnel is completed, and sends an acknowledgement message, Start-Control-Connection-Connected (SCCCN).

Step s1009: The SAC calls the SNS for establishing an STP session, at the same time, negotiates a format for encapsulating a message of session data, and initiates a Call-Request (CRQ) message. For example, the SAC may send an Incoming-Call-Request (ICRQ) message, where the message includes parameters of the DHCP Request or AUTH (authentication) message initiated by the remote system, e.g., the message may include ID information such as a key or a Challenge value, or an Extensible Authentication Protocol (EAP) message.

Step s1010: The SNS receives the Call-Request (CRQ) message initiated by the SAC, acquires ID information of the remote system, and conducts an ID authentication and authorization. Next, the SNS sends an authentication request message (Access Request) to an AAA server of the home network, requesting the authentication and authorization.

Step s1011: The authentication and authorization performed by the AAA server of the home network is successful, the AAA server may then respond a successful message of the authentication and authorization (Access Accept) to the SNS. The AAA server may also send authorization data to the SNS, including Quality of Service (QoS) parameters and policy parameters. If a mechanism of an extensible authentication over the DHCP is adopted by the remote system, i.e., the DHCP is authenticated via the DHCP AUTH message, the SNS may respond the DHCP AUTH message containing an authentication result to the remote system. Next, the SAC forwards this received message to the remote system. After the DHCP AUTH message is received, the remote system continues to initiate an address request (e.g., send a DHCP Request). The SAC then forwards the address request message to the SNS.

Step s1012: The SNS starts a request for assigning an address, e.g., sends a DHCP Request message to an address server (a DHCP server).

Step s1013: The address server assigns an address to the remote system and specifies an IP address lease. Next, the address server responds to the request for assigning an address, and sends a DHCP ACK message.

Step s1014: The SNS receives the DHCP ACK message, acquires the IP address and the address lease assigned by the address server from the message, and establishes an access session of the remote system identified by the IP address assigned by the address server (configuring the QoS parameters, starting the maintenance management of the access session). The SNS specifies an STP (L2TP) session ID, where the STP (L2TP) session ID may be the IP address assigned by the address server, i.e., the access session ID of the remote system may use the same IP address ID as the STP (L2TP) session ID. Also, the SNS establishes a mapping relation between the access session of the remote system and the STP (L2TP) session for forwarding a data message afterward. The SNS responds to the request for establishing a session from the SAC, e.g., sends an Incoming-Call-Reply (ICRP) message, where the message includes parameters of the access session of the remote system and the STP (L2TP) session, e.g., authorization parameters of the home network, and address parameters or an EAP message.

Step s1015 and step s1016: The SAC receives the response message from the SNS, acquires the parameters of the access session of the remote system and the STP (L2TP) session, and establishes a mapping relation between the access session of the remote system and the STP (L2TP) session for forwarding a data message afterward. The mapping relation includes a bonding of the IP address of the access session and the STP (L2TP) session, and also includes a format for encapsulating an STP (L2TP) data message. If the IP address of the access session is a private address, the SAC may bond the remote system ID or the link connected between the remote system and the SAC with the STP (L2TP) session, where the link connected between the remote system and the SAC includes an interface ID, a VLAN ID, a PVC ID, a PBT path ID, an MPLS LSP label, etc. The SAC then responds an acknowledgement message, confirming that the STP (L2TP) session has been established, e.g., sends an Incoming-Call-Connected (ICCN) message.

Step s1017: The SAC responds to the acknowledgement message confirming that the access session of the remote system has been established, e.g., sends a DHCP ACK message. Next, the SAC acquires related parameters, e.g., address parameters, based on the response message (Incoming-Call-Reply (ICRP) message) from the SNS that is received by the SAC, and thereby constructs a DHCP ACK message, or extracts the DHCP ACK message directly from the response message sent from the SNS. The remote system receives the message for confirming the access session from the SAC. Thus, the establishment of the access session is completed, and accordingly, the remote system may access network resources via the established access session. The SAC is responsible for forwarding a message between the SNS and the remote system of the user, based on the mapping relation between the access session of the remote system and the STP (L2TP) session.

Step s1018 and step s1019: The remote system initiates a request for tearing down the access session, e.g., the remote system sends a DHCP Release message. The SAC and the SNS then tear down the STP session (e.g., using a CDN notification). If the STP session is the last session over the STP tunnel, the SAC and the SNS may tear down the STP tunnel that is dynamically established.

According to the embodiment of the present invention, the session established by the remote system is a session with a dynamic IP address. Since the IP address of the remote system is assigned by the address server of the home network, a lease management is usually provided for the dynamic IP address, i.e., when the IP address is assigned, at this point, a time period in which the IP address can be utilized is also specified. If the period expires, the remote system should stop using the IP address. If the remote system needs to extend the lease, the remote system should relet the address. Moreover, if the reletting fails, the remote system may request to re-initiate a request for establishing an access session. At the same time, the SNS and the SAC track and detect a dynamic IP address lease of the access session. If the lease expires or the reletting fails, the SNS or the SAN needs to terminate the STP session associated with the access session identified by the IP address, and release network resources occupied by the access session. Therefore, the remote system can no longer utilize the service (access network) via this access session.

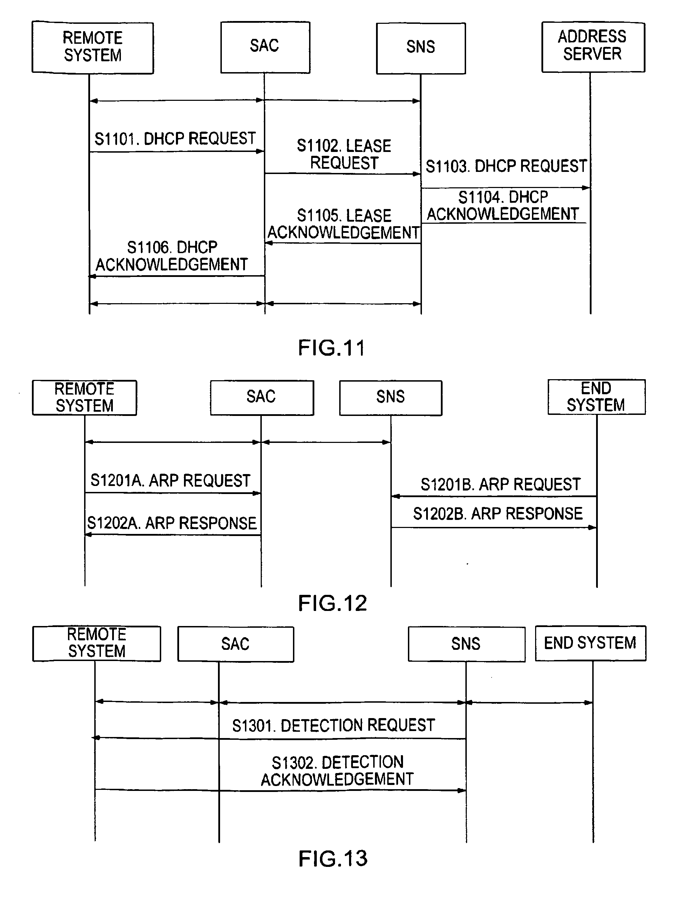

The fourth embodiment of the present invention illustrates a processing flowchart in which the STP supports an extension on a lease of an IP session address according to an embodiment of the present invention. Referring to Figure 11, the following steps are included.

Step s1101: The remote system initiates a request for extending the lease of an address. For example, the remote system initiates a request for extending the lease of an address when the lease is 50%. A request message for extending the lease of an address may be a DHCP Request message, and the request for extending the lease of an address includes parameters such as an IP address concerning the lease to be extended, an extension period of the lease (a new lease), etc.

Step s 1102: The SAC forwards the received request message for extending the lease of an address sent from the remote system to the SNS via an STP lease request. The message may be forwarded via an STP data message, or via an STP control message. Preferably, the message is forwarded via an STP control message.

The procedure of forwarding the request message for extending the lease of an address via the data message by the SAC includes: searching for a mapping relation between the access session and the STP (L2TP) session based on a source IP address of the DHCP Request message and/or a link ID of the message; next, encapsulating the DHCP Request message into the STP data message based on parameters at a table of the mapping relation; and then, sending to the SNS via the tunnel. At this point, the STP lease request message is the DHCP Request message encapsulated in the STP data message.

The procedure of forwarding the request message for extending the lease of an address via the control message by the SAC includes steps as follows. The SAC determines that the message needs to be sent to the SNS via a tunnel, based on the source IP address of the DHCP Request message and/or a link ID of the message, etc. Next, the SAC acquires an ID of the tunnel, encapsulates the DHCP Request message into an STP lease request control message, and then sends the control message to the SNS. The STP lease request control message includes a Set-Link-Info (SLI) message, an Incoming-Call-Request (ICRQ) message, an Outgoing-Call-Request (OCRQ) message, an Explicit-Acknowledgement (ACK) message of the L2TP, etc. The STP lease request control message may also utilize a new STP message, e.g., redefining an STP lease request control message. The foregoing procedure of encapsulating the DHCP Request message into an STP lease request control message by the SAC includes, adapting parameters of the DHCP Request message into a parameter domain of the STP lease request control message, or, taking the whole DHCP Request message as a parameter domain of the STP lease request control message (AVP: Attribute Value Pair).

Step s1103: The SNS receives the STP lease request message from the SAC, and extracts the DHCP Request message or the parameters of the DHCP Request message from the STP lease request message. Next, the SNS sends the DHCP Request message or a DHCP Request message newly constructed via the parameters of the DHCP Request message to the address server, applying for an extension on a lease of the address.

Step s1104: The address server confirms the request for applying an extension on a lease of the address, and sends an acknowledgment message, DHCP ACK, to the SNS.

Step s1105: The SNS forwards the request message for applying an extension on a lease of the address to the SAC via an STP lease acknowledgement, and may also update the lease of the IP address for the session at the same time.

Step s1106: The SAC receives the STP lease acknowledgement message from the SAC, and extracts the DHCP Ack message or the parameters of the DHCP Ack message from the STP lease acknowledgement message. Next, the SNS sends the DHCP Ack message or a DHCP Ack message newly constructed via the parameters of the DHCP Ack message to the remote system. At the same time, the lease of the IP address for the session may also be updated. The remote system receives the DHCP Ack message and updates the lease of the IP address.

According to the fifth embodiment of the present invention, when an IP access session across the network is established via the STP, the tunnel shields the Layer-2 link technology of the access network and the home network. However, if the access network is connected with the remote system using an Ethernet technology, i.e., the SAC is connected with the remote system via an Ethernet, the SAC may have a characteristic of ARP PROXY; if the home network utilizes an Ethernet technology, i.e., the SNS is connected with an end system within the home network via an Ethernet, the SNS may have a characteristic of ARP PROXY. The specific procedure, as illustrated in Figure 12, includes the following steps.

Step s1201a: The remote system sends an ARP Request message, requesting for an MAC address of a certain system host.

Step s1202a: The SAC receives the ARP Request message, and acts for the requested host to respond an ARP Reply message based on an address (an IP address or an MAC address) or a link ID carried in the message. The MAC address in the ARP Reply message responded by the SAC may be the MAC address of the SAC, or a specified MAC address, e.g., a virtual MAC address. The SAC may respond one MAC address in terms of all APR Requests of remote systems, and may also respond one specified MAC address in terms of each specified remote system. In this way, one MAC may correspond to one access session.

When the SAC serves as the ARP PROXY, a virtual MAC address may be used. According to a specific MAC address (segment) ID and the access IP session established by the remote system, and the SAC may identify whether the received data message is a message of the local network or a data message to be sent to the SNS via the STP tunnel that is established by the remote system.

The steps for processing the ARP Request by the SNS, similar to that for the SAC basically, include the following steps.

Step s1201b: The SNS receives an ARP Request message of the end system.

Step s1202b: The SNS determines that the IP address belongs to a host (an IP address of a remote system host) of the session (the access session across the network) established via the STP, based on the IP address requesting by the ARP message. Thus, the SNS acts as a proxy for the remote system to respond an ARP Reply message.

According to the embodiment of the present invention, to optimize the usage of the network resources and satisfy the requirements such as accounting, the network usually needs to perform a maintenance management for the access session, monitoring an access session status, i.e., a keepalive mechanism of the session.

The sixth embodiment of the present invention illustrates a method for implementing a keepalive mechanism of the IP session established across the network, in which the keepalive mechanism of the IP session is directly adopted by the SNS and the remote system, and therefore the SAC may not perceive the keepalive mechanism of the access session. The remote system or the SNS checks a status of the peer by periodically sending a status detection message. Example is described below in which the SNS periodically sends a detection message. Referring to Figure 13, the following steps are included.

Step s1301: After an access session is established by the SNS (remote system accesses the network), the SNS sends a status detection request message (Test Request), where the entity that triggers the SNS for sending the message includes a periodic timer, i.e., the SNS is triggered for sending the message by a periodic timer. The status detection request message (Test Request) includes an ARP Request message, or a Bidirectional Forwarding Detection (BFD) message, or a DHCP message, where a specific type of the message depends on an implementation. The SNS sends the status detection request message (Test Request) via an STP data message. The SAC receives the data message, and forwards the status detection request message (Test Request) to the remote system.

Step s1302: The remote system receives a status detection acknowledgment message (Test Reply) sent by the SNS, and responds to the status detection request of the SNS. The status detection acknowledgment message (Test Reply) includes an ARP Reply message, or a BFD message, or a DHCP message, where a specific type of the message depends on an implementation. The remote system may determine the access session status based on the status detection request message (Test Request). If no status detection request message (Test Request) of the SNS is received within a given period, it is determined that the access session is abnormal, and therefore a processing for an abnormal access session is performed, e.g., terminating the access session. The SAC receives the status detection acknowledgment message (Test Reply) of the remote system, and forwards the message to the SNS via an STP data message.

The SNS receives the status detection acknowledgment message (Test Reply) of the remote system, determines that the remote system is in a normal status, and thus continues to be waiting for a next detection. If no status detection acknowledgment message (Test Reply) of the remote system is received by the SNS during a specified period or specified times, the SNS may determine that the remote system is in an abnormal status, and may terminate the session accordingly. The active sending of the status detection message is not subjected to the SNS. The remote system may also send the status detection request message (Test Request), and then determine the access session status based on the status detection acknowledgment message (Test Reply) responded by the SNS.

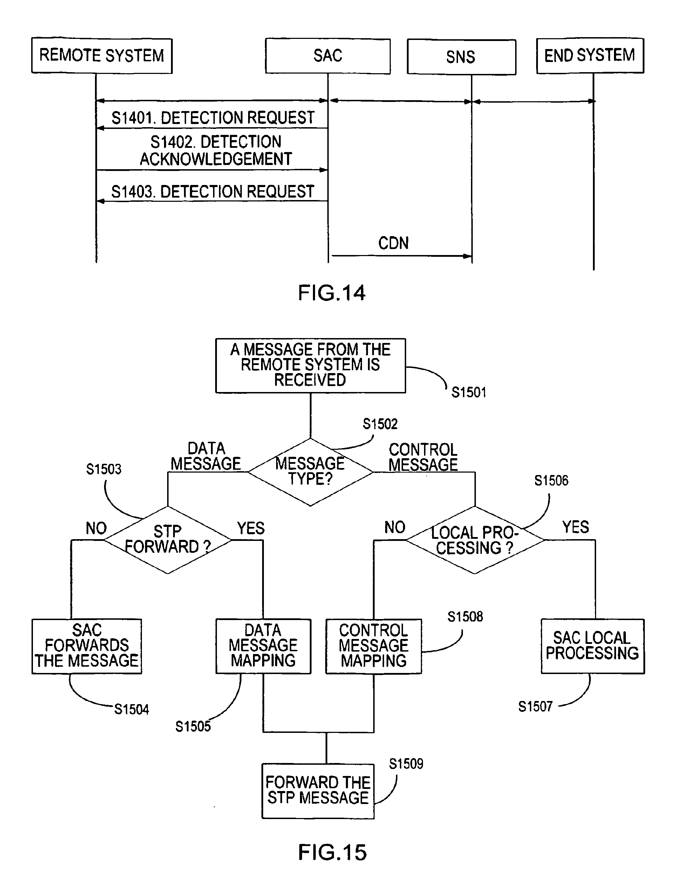

According to the seventh embodiment of the present invention, a keepalive mechanism of the IP session is directly adopted by the SAS and the remote system, and the SAC acts for the SNS to perceive the keepalive mechanism of the access session. The remote system or the SAC checks a status of the peer by periodically sending a status detection message. Example is described below in which the SAC periodically sends a detection message. Referring to Figure 14, the following steps are included.

Step s1401: After the SAC perceives that an access session is established (remote system accesses the network), the SAC sends a status detection request message (Test Request) to the remote system, where the entity that triggers the SAC for sending the message includes a periodic timer, i.e., the SAC is triggered for sending the message by a periodic timer. The status detection request message (Test Request) includes an ARP Request message, or a BFD message, or a DHCP message, or an OAM message. A specific type of the message depends on an implementation.

Step s1402: The remote system receives a status detection request message (Test Request) sent by the SAC, and responds a status detection acknowledgement message (Test Reply) to the status detection request of the SAC. The status detection acknowledgment message (Test Reply) includes an ARP Reply message, or a BFD message, or a DHCP message, or an OAM message. A specific type of the message depends on an implementation. The remote system may determine the access session status based on the status detection request message (Test Request). If no status detection request message (Test Request) of the SAC is received within a given period, it is determined that the access session is abnormal, and therefore a processing for an abnormal access session is performed, e.g., terminating the access session.

Step s1402: The SAC receives the status detection acknowledgment message (Test Reply) of the remote system, determines that the remote system is in a normal status, and thus continues to be waiting for a next detection.

Step s1403: The SAC sends the status detection request message (Test Request) to the remote system. If no status detection acknowledgment message (Test Reply) of the remote system is received by the SAC during a specified period or specified times (e.g., two times according to the present embodiment), it is determined that the remote system is in an abnormal status, and the session is terminated accordingly. The session termination processing includes sending a session termination notification message to inform the SNS for processing the abnormal session, e.g., sending a Call-Disconnect-Notify (CDN) control message to the SNS. The status detection message may not only be actively sent by the SAC. The remote system may also send the status detection request message (Test Request), and then determine the access session status based on the status detection acknowledgment message (Test Reply) responded by the SAC.

The eighth embodiment of the present invention illustrates a flowchart for processing a message received from the remote system by the SAC. Referring to Figure 15, the following steps are included.

Step s1501: The SAC receives a communication message from the remote system (terminal), e.g., a TCP message, a UDP message, a DHCP message, an OAM message, an ICMP message, an IP message, an ARP message, etc. The format of the communication message includes an IPoE message, an IPoWDM message, an IP over ATM (IPoA) message, etc. Preferably, the following steps may also be included. The SAC receives a message from a terminal, and identifies that the message is from the remote system. Specifically, the determination may be performed based on at least a header parameter of the message and/or a link ID of the message. The header parameter of the message at least includes a source or destination IP address of the message, a source or destination MAC address of the message, a Service Label of an Ethernet header of the message. The link ID of the message at least includes a VLAN or a PVC carrying the message, or an interface number, e.g., the message, having a source IP address of a segment or an MAC address of a segment or in a VLAN, belongs to the remote system. The determination rule depends on a specific implementation.

Step s1502: The SAC determines (or identifies) the type of the message. The type of the message at least includes a control message and a data message. The control message includes a DHCP message, an ARP message, an EAP message, an 802.1x message, a PANA message, and an Operation Administration & Maintenance (OAM) message, etc. The data message includes an ordinary (other than the control message) TCP message, an ordinary (other than the control message) UDP message, an ordinary (other than the control message) IP message, etc. The rule for classifying an SAC message may be configured or modified dynamically, and the rule or the policy may depend on an actual implementation.

Step s1503: If a message from the remote system received by the SAC is a data message, it is determined whether a forward over the STP is required. In other words, it is determined whether the message requires to be forwarded to the SNS after an STP mapping processing. If required (or YES), the process proceeds to step s1505; if not required (NO), the process proceeds to step s1504. Specifically, the determination may be performed based on at least a header parameter of the message and/or a link ID of the message. For example, a destination IP address of a segment requires to be forwarded over the STP, a destination MAC address within a range requires to be forwarded over the STP, a message from a VLAN requires to be forwarded over the STP, etc. The SAC may also support a determination of forwarding a message of the remote access session (a message of the remote system) to a public network directly via the SAC. For example, it is determined whether the message needs to be forwarded to a public network (e.g., the Internet) directly via the SAC. The negotiation for establishing the access session may determine whether a message of the remote system is allowed to be forwarded to a public network via the SAC, i.e., the SNS informs the SAC to perform the determination via the STP control message, where, by default, a message of the remote system is generally non-allowed to be forwarded to a public network via the SAC.

Step s1504: The SAC forwards the data message, including routing and forwarding the data message or directly forwarding via Layer-2. If the message is forwarded to the public network directly via the SAC, the SAC may perform an NAT on the message and then continue to forward the message.

Step s1505: The SAC performs a data message mapping processing on the data message from the remote system (e.g., an IPoE message containing the IP packet loads). The mapping includes mapping to an STP tunnel and an STP session based on the header parameter of the message and/or the link ID of the message, and then taking the IP packets loads of the data message as data loads of the STP data message and encapsulating into the STP data message according to encapsulation parameters in a mapping table. For example, an STP session mapping table is searched based on a source IP address of the IP packets loads of the data message. A tunnel ID and a session ID as well as parameters of an encapsulation format of the message are acquired. The IP packets loads of the data message are encapsulated to the STP data message according to the encapsulation format. The tunnel is then notified to forward the message. The adaption further includes a Maximum Transmission Unit (MTU) processing, including a message fragmentation. The data message, after the mapping processing, proceeds to step s1509 for processing.

Step s1506: If the message from the remote system received by the SAC is a control message, it is determined whether the message merely needs a local processing (a termination processing) by the SAC. If the message is to be processed locally by the SAC, the procedure proceeds to step s1507 for indicating or notifying the SAC to process the message locally, e.g., for an ARP message, the SAC may act for the SNS to process the ARP message. If the message needs to be handed over to the SNS for processing via the SAC, the procedure proceeds to step s1508, where the SAC notifies the SAC to perform a mapping processing on the control messages.

Step s1507: The SAC processes the control message from the remote system, including situations that the SAC may serve as an ARP Proxy for processing an ARP message, the SAC may serve as a keepalive node for processing a status detection request message (Test Request), or the SAC may act in a PROXY mode for processing a negotiation message for discovering the access session (DHCP Discovery message), etc.

Step s1508: The SAC performs a mapping processing on the control message. The SAC performs an STP control message mapping processing on the control message from the remote system, and then sends out via the STP. The mapping includes mapping the control message to an STP tunnel based on contents of the message and/or the link ID of the message, and then mapping the control message to the STP data message, or taking the control message as the STP control message and encapsulating into the STP control message according to tunnel encapsulation parameters, next, notifying the tunnel to forward the STP message. The mapping processing for control message performed by the SAC may further include a processing for the control message, e.g., acquiring message contents (ID information for example) and performing an authentication and authorization based on the message contents, etc. The procedure proceeds to step s1509.

Step s1509: The SAC forwards the STP message, where the STP message includes an STP control message and an STP data message. The SAC sends out the STP message via a corresponding STP tunnel.

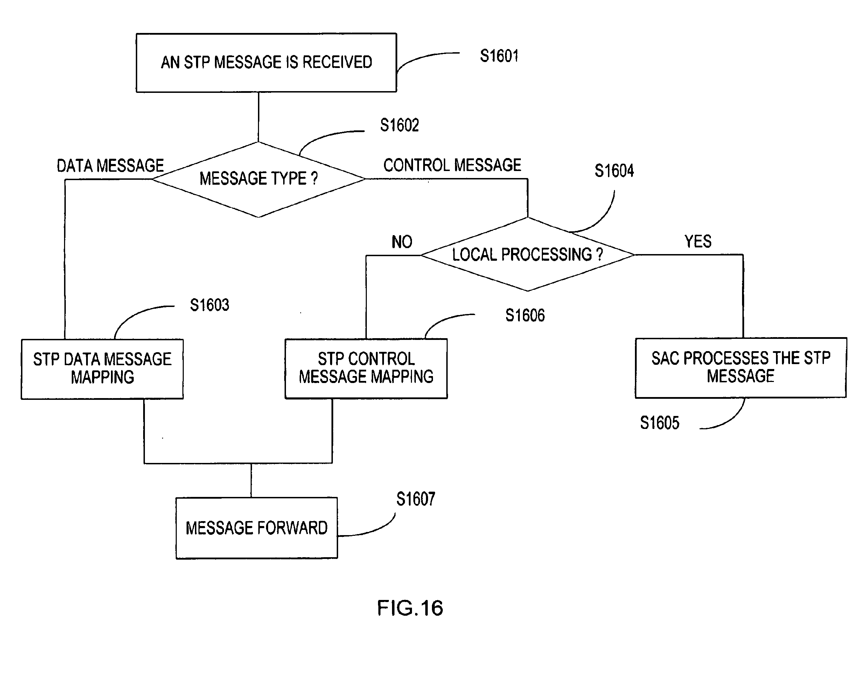

The ninth embodiment of the present invention illustrates a flowchart for processing an STP message by the SAC. Referring to Figure 16, the following steps are included.

Step s1601: The SAC receives an STP message (from the peer, SNS), where the STP message includes an STP control message or an STP data message.

Step s 1602: The SAC acquires the type of the message, including identifying based on a related domain of the tunnel header or an STP message header. If the message is an STP data message, the procedure proceeds to step s1603 where a mapping processing is performed on the STP data message. If the message is an STP control message, the procedure proceeds to step s1604 where a processing is performed on the STP control message.

Step s1603: A mapping processing is performed on the STP data message, including, removing the tunnel header or the STP message header from the STP message; extracting Layer-3 session data packets or frames (e.g., IP packets of data loads); next, acquiring Layer-2 address parameters of the IP packets of data loads based on a destination IP address of the IP packets of data loads, including a source MAC address and a destination MAC address, e.g., acquiring an MAC address to which the IP address corresponds from an ARP table and acquiring a link ID (a link or a port via which the remote system is connected) from a session mapping table; and then, adding a Layer-2 header (e.g., an Ethernet header) into the Layer-3 session data packets or frames (e.g., IP packets of data loads) to form a communication data message (e.g., an IP over Ethernet, IPoE, message) between the SAC and the remote system; next, instructing to send out via a specified link (to the remote system).

Step s1604: The SAC determines whether the STP control message needs to be processed (terminated) locally, i.e., whether the STP control message merely needs a local processing by the SAC. If the STP control message is to be processed locally by the SAC, the procedure proceeds to step s1605 where the STP control message is processed locally. If the SAC needs to hand over the STP control message to the remote system for processing, the procedure proceeds to step s1606.

Step s1605: The SAC processes the STP control message, including negotiation for establishing the STP tunnel, maintenance and tear-down of a negotiation control message. If the STP is an L2TP protocol, the control message may include a Start-Control-Connection-Request (SCCRQ) message, a Start-Control-Connection-Reply (SCCRP) message, a Start-Control-Connection-Connected (SCCCN) message, a Stop-Control-Connection-Notification (StopCCN) message, and a Hello (HELLO) message. The SAC may process the STP control message according to the STP protocol.

Step s1606: A mapping processing is performed on the STP control message. Specifically, the mapping processing includes mapping and encapsulating the STP control message into a communication control message (e.g., a DHCP message, a PANA message, or a 802.1x message) between the SAC and the remote system. The STP control message includes an STP control message for the negotiation for establishing the session, the maintenance and the tear-down negotiation, e.g., an Outgoing-Call-Request (OCRQ) message, an Incoming-Call-Reply (ICRP) message, a Set-Link-Info (SLI) message, an Outgoing-Call-Connected (OCCN) message, etc. The mapping includes extracting contents of the control message from the STP control message, and then encapsulating the contents of the control message in a format of the message between the SAC and the remote system based on an ARP table or a session mapping table. The mapping further includes extracting parameters of the control message from the control message, and then converting the extracted parameters into another protocol message, e.g. extracting parameters from an Incoming-Call-Reply (ICRP) message, and then converting into a DHCP ACK message based on the parameters.

Step s1607: The SAC forwards the message, i.e., the SAC sends the message to the remote system.

The procedure for processing a message by the SNS is similar to that performed by the SAC, where the procedure for processing a message by the SNS includes processing a message sent to the remote system and received by an end system within the network, and processing an STP message received from the SAC. The procedure for processing a message by the SNS may refer to the procedure for processing a message by the SAC, which is omitted herein for brevity.

According to the embodiment of the present invention, a Maximum Transmission Unit (MTU) processing for the received data message performed by the SAC and the SNS is further included, e.g., the mapping processing for the data message performed by the SAC and the mapping processing for the data message performed by the SNS may include adding a new message header, e.g., adding an STP message header and a tunnel header. In this way, the ultimate message length may thereby exceed the Maximum Transmission Unit (MTU) which an underlying layer of the network can bear. Accordingly, the MTU processing is added into the mapping processing for the data message performed by the SAC and the mapping processing for the data message performed by the SNS. In other words, it is determined whether the length of the message after the mapping exceeds the MTU which an underlying layer of the network can bear. If the message length exceeds the MTU, the MTU processing is thus performed.

The MTU processing for a message performed by the SAC or the SNS may have a different processing mechanism based on the type of the message. For an IPV4 message, the SAC or the SNS first segments the message according to the principle of IP. Next, the SAC or the SNS maps the segmented message, and then sends out via the tunnel. For an IPV6 message, the MTU processing by the SAC and the SNS includes two approaches. According to one approach, the SAC or the SNS informs a source which sends the message via an ICMP message that the message is too long so that the length of the message needs to be shorted (a desired MTU is announced), and thereby the message is discarded by the SAC or the SNS. According to the other approach, the SAC or the SNS first segments the message, and then the peer (the SAC and the SNS are peers for each other) reassembles the received message. In this situation, since no segment or assembly mechanism is provided with the IPv6, information for identifying a segment or a reassembly needs to be added into the STP header, e.g., a sequence number of the message as well as start and termination identifiers, so that the SAC or the SNS may perform the segment or the reassembly processing based on segment and reassembly information.

According to the tenth embodiment, a tear-down processing for the access session is provided. The tear-down of the access session of the remote system includes a tear-down of the session initiated actively by the remote system, and a passive tear-down of the access session.

The tear-down of the session initiated actively by the remote system includes initiating a request for the tear-down of the access session by the remote system, e.g., sending a DHCP Release message, a 802.1x EAPoL Logoff message; receiving, by the SAC, the request for the tear-down of the session initiated by the remote system; notifying, by the SAC, the SNS to tear down the corresponding STP session, where the notification includes sending a Call-Disconnect-Notify (CDN) message to the SNS by the SAC; tearing down the STP session by the SAC or the SNS; and tearing down, by the SAC or the SNS, the STP tunnel that is dynamically established, if the STP session is the last session over the STP tunnel.

The passive tear-down of the access session includes: tearing down the STP session by the SAC or the SNS, e.g., tearing down the STP session by the SAC or the SNS if the SAC or the SNS detects that the access session is in an abnormal status via a keepalive mechanism; or, notifying the SAC or the SNS to tear down the STP session via instructions from a network management system or application software.

According to an embodiment of the present invention, a system for accessing a Layer-3 session is further provided. The system for accessing a Layer-3 session includes a network edge apparatus, configured to receive a message from a remote system, perform an STP mapping on the message and then send to a session network server (SNS) via the STP; perform an STP tunnel termination in terms of the message from the SNS, perform a link layer mapping or a physical layer mapping concerning a message that needs to be forwarded, and then send to the remote system; a session network server, configured to perform a tunnel termination in terms of a message from an SAC, and classify the message based on an STP message header; map a destination address of a Layer-3 data message from an end system into an STP tunnel, and forward to the remote system via the SAC over the STP tunnel.

Specifically, the network edge apparatus includes: a first receiving unit, configured to receive a message of a remote system; a first message processing unit, configured to map the message; a first sending unit, configured to send the message, after performing an STP mapping, to a session network server (SNS); a second receiving unit, configured to receive an STP message from the SNS; a second message processing unit, configured to perform an STP tunnel termination in terms of the message from the SNS, and perform a link layer or a physical layer mapping; a second sending unit, configured to send the mapped message to the remote system; an STP tunnel establishing unit, configured to negotiate with the SNS for establishing an STP tunnel; an STP session establishing unit, configured to negotiate with the SNS for establishing an STP session; a lease detecting unit, configured to acquire a new lease of the session after an acknowledgement of extending the lease from the SNS is received, and notify the remote system; a keepalive detecting unit, configured to keep an IP session alive via a status detection message interacted with the remote system. The network edge apparatus may further include an ARP proxy unit, configured to act as a proxy for a home network apparatus (e.g., an SNS) to process (e.g., respond to) an ARP address request message from the remote system, and map an IP address to an MAC address.

The first message processing unit specifically includes a mapping subunit, configured to map the message to an STP tunnel and a session based on parameters of a message header and/or a link ID of the data message; and an encapsulating subunit, configured to encapsulate the IP packet to an STP message.

The second message processing unit specifically includes a Layer-3 message extracting subunit, configured to remove a tunnel header of the data message or an STP message header, and extract the Layer-3 message; a Layer-2 address acquiring subunit, configured to acquire a Layer-2 address of the Layer-3 message based on a destination IP address of the Layer-3 message; and an adaption subunit, configured to adapt the Layer-3 message based on the Layer-2 address.

The session network server specifically includes a third receiving unit, configured to receive a message from an SAC; a third message processing unit, configured to perform a tunnel termination in terms of the message from the SAC, and classify the message based on an STP message header; a third sending unit, configured to send the message based on the classification processing result; a fourth receiving unit, configured to receive a Layer-3 data message from the end system; a fourth message processing unit, configured to map a destination address of the Layer-3 data message from the end system to the STP tunnel, and perform an STP adaption on the Layer-3 data; and a fourth sending unit, configured to send the adapted message to the remote system via the STP tunnel.

The third message processing unit specifically includes a tunnel terminating subunit, configured to acquire connection information of a tunnel and/or a session, and remove a tunnel header from the message; and a classification processing subunit, configured to remove a message header in terms of a data message with the STP data message header, and send out based on a destination address of the Layer-3 message; and configured to send to an associated apparatus for processing based on a message type in terms of a control message.

The fourth message processing unit specifically includes a mapping subunit, configured to map a destination address of the Layer-3 data message from the end system to the STP tunnel; and an adaption subunit, configured to add an STP message header into the Layer-3 data.

According to the embodiments of the present invention, a remote user may cross an access network via an IP access session for example, and thus access a home network of the user using a VPDN or a wholesale mechanism concerning a Layer-3 session access approach. The access network includes a wholesale network or a public network in a wholesale scenario, whereas the home network of the user refers to a subscription network of the user, including a retail network or an enterprise Intranet in a wholes scenario, or a home network in a nomadic scenario. It is possible that a Layer-2 link technology of the access network is different from that of the home network of the user. Consequently, a unified Layer-3 session for accessing is proposed to address the issue of an interconnection between the Layer-2 link technology of the access network and that of the home network of the user, since the Layer-3 session may shield the Layer-2 link technology of the access network and that of the home network of the user.

With the description of the foregoing embodiments, it is readily appreciated by those skilled in the art that the present invention may be implemented with hardware, and may also be implemented with software on a necessary hardware platform. Based on this understanding, solutions provided by the present invention may be embodied in a software product. The software product may be stored in a nonvolatile storage media (may be a CD-ROM, a USB flash disc, a mobile hard disc, etc.) The software product may include a set of instructions enabling a computer device (may be a personal computer, a server, or a network device, etc.) to perform methods according to various embodiments of the present invention.

In summary, the foregoing is merely some exemplary embodiments of the present invention and is not intended to limit the scope of the present invention. Any modifications, equivalents, improvements made within the principle of the present invention shall be construed as fall within the scope of the present invention.

## Claims

1. A Layer-3 based session access method for Virtual Private Dial Network, VPDN, comprising:
establishing (s802, s904, s1003), by a session access concentrator, SAC, in an access network of a user, an access session with a remote system;
establishing (s805, s906, s1009), by the SAC, a Session Transport Protocol, STP, session with a session network server, SNS, in home network of the user;
establishing (s806, s906, s1016), by the SAC, a mapping relation between the access session of the remote system, and the STP session, wherein the mapping relation establishing step further comprises establishing the mapping relation of an access session ID of the remote system, and/or a link layer or physical layer ID of the access session, to an STP tunnel, and an STP session ID; and
forwarding (s807, s908, s1017), by the SAC, messages between the remote system and the SNS according to the mapping relation.

2. The method of claim 1, further comprising:
establishing (s806, s1016), by the SNS, the mapping relation between the access session of the remote system and the STP session; and
forwarding (s807, s908, s1017), by the SNS, messages between the remote system and the home network according to the mapping relation.

3. The method of claim 1 or 2, wherein the processing of establishing an access session with the remote system comprises:
receiving (s802, s1003), by the SAC, a negotiation message for establishing an access session from the remote system;
mapping (s805, s1009), by the SAC, the negotiation message to an STP session negotiation control message and sending (s805) the STP session negotiation control message to the SNS;
receiving (s806, s1015), by the SAC, an STP session negotiation control message from the SNS; and
responding (s806, s1017), by the SAC, a negotiation message for establishing an access session to the remote system indicating that the access session has been established.

4. The method of claim 3, further comprising:
establishing (s806), by the SAC, the STP session with the SNS according to the STP session negotiation control message received from the SNS.

5. The method of claim 3, further comprising:
forwarding, by the SAC, an address request message from the remote system to the SNS;
sending (s1012), by the SNS, the address request message to an address server;
receiving (s1013), by the SNS, an IP address and address lease assigned to the remote system from the address server;
establishing, by the SNS, an access session of the remote system identified by the IP address and an STP session with the SAC; and
sending (s1014), by the SNS, a response to the STP session negotiation control message, wherein the message comprises parameters of the access session of the remote system and the STP session.

6. The method of claim 5, further comprising:
detecting, by the SAC or the SNS, the IP address lease of the access session of the remote system;
terminating, by the SAC or the SNS, the STP session if the IP address lease expires or reletting of the IP address fails.

7. The method of claim 5 or 6, wherein the mapping relation between the access session of the remote system and the STP session comprises a bonding of the IP address of the access session, the STP session and a format for encapsulating an STP data message.

8. The method of claim 1, further comprising:
receiving (s1501), by the SAC, a message from the remote system;
determining (s1502), by the SAC, a type of the message;
mapping (s1505, s1508), by the SAC, the message to an STP message if the message is a data message that needs to be STP forwarded or a control message that does not need a local processing; and
sending (s1509), by the SAC, the STP message to the SNS.

9. The method of claim 8, further comprising:
performing (s1507), by the SAC, a local processing on the message if the message is a control message that needs a local processing;
wherein the local processing comprises:
responding, by the SAC, an ARP Reply message based on an address or a link ID carried in the message, when the control message is an ARP proxy request message; or
determining, by the SAC, status of the access session when the message is a status detection acknowledgement message.

10. The method of claim 1, further comprising:
receiving (s1601), by the SAC, an STP message from the SNS;
determining (s1602), by the SAC, a type of the STP message;
mapping (s1603, s1606), by the SAC, the STP message to a communication message between the SAC and the remote system if the message is a data message or a control message that does not need a local processing; and
sending (s1607), by the SAC, the communication message to the remote system.

11. A Layer-3 based session access system comprising: a remote system, a session access concentrator, SAC, and a session network server, SNS, wherein
the session access concentrator is in an access network of a user, and is configured to establish an access session with the remote system; establish a Session Transport Protocol, STP, session with the SNS in home network of the user; establish a mapping relation between the access session of the remote system and the STP session and forward messages between the remote system and the SNS according to the mapping relation, wherein the SAC is configured to establish the mapping relation of an access session ID of the remote system, and/or a link layer or physical layer ID of the access session, to an STP tunnel, and an STP session ID.

12. The system of claim 11, wherein the SNS is configured to establish mapping relation between the access session of the remote system and the STP session, and forward messages between the remote system and the home network according to the mapping relation.

13. The system of claim 11 or 12, wherein the SAC is further configured to receive a negotiation message for establishing an access session from the remote system; map the negotiation message to an STP session negotiation control message; send the STP session negotiation control message to the SNS; receive an STP session negotiation control message from the SNS; and respond a negotiation message for establishing an access session to the remote system indicating that the access session has been established.

14. The system of claim 11 or 12, wherein the SAC is further configured to receive a message from the remote system; determine a type of the message; map the message to an STP message if the message is a data message that needs to be STP forwarded or a control message that does not need a local processing; and send the STP message to the SNS.

15. The system of claim 11 or 12, wherein the SAC is further configured to receive an STP message from the SNS; determine a type of the STP message; map the STP message to a communication message between the SAC and the remote system if the message is a data message or a control message that does not need a local processing; and send the communication message to the remote system.

## Patentansprüche

1. Schicht-3-basiertes Sitzungszugangsverfahren für ein virtuelles privates Wählnetz, VPDN, das Folgendes umfasst:
Herstellen (s802, s904, s1003) einer Zugangssitzung mit einem entfernten System in einem Zugangsnetz eines Benutzers durch einen Sitzungszugangs-Konzentrator, SAC;
Herstellen (s805, s906, s1009) einer Sitzungstransportprotokoll-Sitzung, STP-Sitzung, mit einem Sitzungsnetz-Server, SNS, in einem Heimnetz des Benutzers durch den SAC;
Herstellen (s806, s906, s1016) einer Abbildungsbeziehung zwischen der Zugangssitzung des entfernten Systems und der STP-Sitzung durch den SAC, wobei der Schritt des Herstellens der Abbildungsbeziehung ferner das Herstellen der Abbildungsbeziehung der Zugangssitzungs-ID des entfernten Systems und/oder einer Verbindungsschicht- oder physikalischen Schicht-ID der Zugangssitzung zu einem STP-Tunnel und einer STP-Sitzungs-ID umfasst; und
Weiterleiten (s807, s908, s1017) von Nachrichten zwischen dem entfernten System und dem SNS in Übereinstimmung mit der Abbildungsbeziehung durch den SAC.

2. Verfahren nach Anspruch 1, das ferner Folgendes umfasst:
Herstellen (s806, s1016) der Abbildungsbeziehung zwischen der Zugangssitzung des entfernten Systems und der STP-Sitzung durch den SNS; und
Weiterleiten (s807, s908, s1017) von Nachrichten zwischen dem entfernten System und dem Heimnetz in Übereinstimmung mit der Abbildungsbeziehung durch den SNS.

3. Verfahren nach Anspruch 1 oder 2, wobei die Verarbeitung zum Herstellen einer Zugangssitzung mit dem entfernten System Folgendes umfasst:
Empfangen (s802, s1003) einer Verhandlungsnachricht zum Herstellen einer Zugangssitzung von dem entfernten System durch den SAC;
Abbilden (s805, s1009) der Verhandlungsnachricht auf eine STP-Sitzungsverhandlungs-Steuernachricht und Senden (s805) der STP-Sitzungsverhandlungs-Steuernachricht an den SNS durch den SAC;
Empfangen (s806, s1015) einer STP-Sitzungsverhandlungs-Steuernachricht von dem SNS durch den SAC; und
Antworten (s806, s1017) mit einer Verhandlungsnachricht zum Herstellen einer Zugangssitzung, die angibt, dass die Zugangssitzung hergestellt worden ist, dem entfernten System durch den SAC.

4. Verfahren nach Anspruch 3, das ferner Folgendes umfasst:
Herstellen (s806) der STP-Sitzung mit dem SNS in Übereinstimmung mit der von dem SNS empfangenen STP-Sitzungsverhandlungs-Steuernachricht durch den SAC.

5. Verfahren nach Anspruch 3, das ferner Folgendes umfasst:
Weiterleiten einer Adressenanforderungsnachricht von dem entfernten System zu dem SNS durch den SAC;
Senden (s 1012) der Adressenanforderungsnachricht an einen Adressenserver durch den SNS;
Empfangen (s1013) einer IP-Adresse und einer Adressenmiete, die dem entfernten System zugewiesen ist, von dem Adressenserver durch den SNS;
Herstellen einer Zugangssitzung des durch die IP-Adresse identifizierten entfernten Systems und einer STP-Sitzung mit dem SAC durch den SNS; und
Senden (s1014) einer Antwort auf die STP-Sitzungsverhandlungs-Steuernachricht durch den SNS, wobei die Nachricht Parameter der Zugangssitzung des entfernten Systems und der STP-Sitzung umfasst.

6. Verfahren nach Anspruch 5, das ferner Folgendes umfasst:
Detektieren der IP-Adressenmiete der Zugangssitzung des entfernten Systems durch den SAC oder den SNS;
Beenden der STP-Sitzung durch den SAC oder den SNS, falls die IP-Adressenmiete abläuft oder die Neuvermietung der IP-Adresse scheitert.

7. Verfahren nach Anspruch 5 oder 6, wobei die Abbildungsbeziehung zwischen der Zugangssitzung des entfernten Systems und der STP-Sitzung eine Verbindung der IP-Adresse der Zugangssitzung, die STP-Sitzung und ein Format zum Einkapseln einer STP-Datennachricht umfasst.

8. Verfahren nach Anspruch 1, das ferner Folgendes umfasst:
Empfangen (s1501) einer Nachricht von dem entfernten System durch den SAC;
Bestimmen (s1502) eines Typs der Nachricht durch den SAC;
Abbilden (s1505, s1508) der Nachricht auf eine STP-Nachricht durch den SAC, falls die Nachricht eine Datennachricht, die STP-weitergeleitet werden muss, oder eine Steuernachricht, die keine örtliche Verarbeitung benötigt, ist; und
Senden (s1509) der STP-Nachricht durch den SAC an den SNS.

9. Verfahren nach Anspruch 8, das ferner Folgendes umfasst:
Ausführen (s1507) einer örtlichen Verarbeitung an der Nachricht durch den SAC, falls die Nachricht eine Steuernachricht ist, die eine örtliche Verarbeitung benötigt;
wobei die örtliche Verarbeitung Folgendes umfasst:
Antworten mit einer ARP-Antwortnachricht basierend auf einer Adresse oder einer Verbindungs-ID, die in der Nachricht geführt wird, durch den SAC, wenn die Steuernachricht eine ARP-Proxy-Anforderungsnachricht ist; oder
Bestimmen des Zustands der Zugangssitzung durch den SAC, wenn die Nachricht eine Zustandsdetektions-Quittungsnachricht ist.

10. Verfahren nach Anspruch 1, das ferner Folgendes umfasst:
Empfangen (s1601) einer STP-Nachricht von dem SNS durch den SAC;
Bestimmen (s 1602) eines Typs der STP-Nachricht durch den SAC;
Abbilden (s1603, s1606) der STP-Nachricht auf eine Kommunikationsnachricht zwischen dem SAC und dem entfernten System durch den SAC, falls die Nachricht eine Datennachricht oder eine Steuernachricht, die keine lokale Verarbeitung benötigt, ist; und
Senden (s 1607) der Kommunikationsnachricht durch den SAC an das entfernte System.

11. Schicht-3-basiertes Sitzungszugangssystem, das Folgendes umfasst: ein entferntes System, einen Sitzungszugangs-Konzentrator, SAC, und einen Sitzungsnetz-Server, SNS, wobei:
sich der Sitzungszugangs-Konzentrator in einem Zugangsnetz eines Benutzers befindet und konfiguriert ist, eine Zugangssitzung mit dem entfernten System herzustellen; eine Sitzungstransportprotokoll-Sitzung, STP-Sitzung, mit dem SNS in dem Heimnetz des Benutzers herzustellen; eine Abbildungsbeziehung zwischen der Zugangssitzung des entfernten Systems und der STP-Sitzung herzustellen und Nachrichten zwischen dem entfernten System und dem SNS in Übereinstimmung mit der Abbildungsbeziehung weiterzuleiten, wobei der SAC konfiguriert ist, die Abbildungsbeziehung einer Zugangssitzungs-ID des entfernten Systems und/oder einer Verbindungsschicht- oder physikalischen Schicht-ID der Zugangssitzung zu einem STP-Tunnel und einer STP-Sitzungs-ID herzustellen.

12. System nach Anspruch 11, wobei der SNS konfiguriert ist, eine Abbildungsbeziehung zwischen der Zugangssitzung des entfernten Systems und der STP-Sitzung herzustellen und Nachrichten zwischen dem entfernten System und dem Heimnetz in Übereinstimmung mit der Abbildungsbeziehung weiterzuleiten.

13. System nach Anspruch 11 oder 12, wobei der SAC ferner konfiguriert ist, eine Verhandlungsnachricht zum Herstellen einer Zugangssitzung von dem entfernten System zu empfangen; die Verhandlungsnachricht auf eine STP-Sitzungsverhandlungs-Steuernachricht abzubilden; die STP-Sitzungsverhandlungs-Steuernachricht an den SNS zu senden; eine STP-Sitzungsverhandlungs-Steuernachricht von dem SNS zu empfangen; und mit einer Verhandlungsnachricht zum Herstellen einer Zugangssitzung, die angibt, dass die Zugangssitzung hergestellt worden ist, dem entfernten System zu antworten.

14. System nach Anspruch 11 oder 12, wobei der SAC ferner konfiguriert ist, eine Nachricht von dem entfernten System zu empfangen; einen Typ der Nachricht zu bestimmen; die Nachricht auf eine STP-Nachricht abzubilden, falls die Nachricht eine Datennachricht, die STP-weitergeleitet werden muss, oder eine Steuernachricht, die keine örtliche Verarbeitung benötigt, ist; und die STP-Nachricht an den SNS zu senden.

15. System nach Anspruch 11 oder 12, wobei der SAC ferner konfiguriert ist, eine STP-Nachricht von dem SNS zu empfangen; einen Typ der STP-Nachricht zu bestimmen; die STP-Nachricht auf eine Kommunikationsnachricht zwischen dem SAC und dem entfernten System abzubilden, falls die Nachricht eine Datennachricht oder eine Steuernachricht, die keine lokale Verarbeitung benötigt, ist; und die Kommunikationsnachricht an das entfernte System zu senden.

## Revendications

1. Procédé d'accès de session de couche 3 pour un Réseau Privé Commuté Virtuel, VPDN, comprenant :
l'établissement (s802, s904, s1003), par un concentrateur d'accès de session, SAC, dans un réseau d'accès d'un utilisateur, d'une session d'accès avec un système distant ;
l'établissement (s805, s906, s1009), par le SAC, d'une session de Protocole de Transport de Session, STP, avec un serveur de réseau de session, SNS, dans un réseau de rattachement de l'utilisateur ;
l'établissement (s806, s906, s1016), par le SAC, d'une relation de mise en correspondance entre la session d'accès du système distant et la session STP, l'étape d'établissement de la relation de mise en correspondance comprenant en outre l'établissement de la relation de mise en correspondance d'une ID de session d'accès du système distant, et/ou d'une ID de couche liaison ou de couche physique de la session d'accès, avec un tunnel STP, et une ID de session STP ; et
l'acheminement (s807, s908, s1017), par le SAC, de messages entre le système distant et le SNS en fonction de la relation de mise en correspondance.

2. Procédé selon la revendication 1, comprenant en outre :
l'établissement (s806, s1016), par le SNS, de la relation de mise en correspondance entre la session d'accès du système distant et la session STP ; et
l'acheminement (s807, s908, s1017), par le SNS, de messages entre le système distant et le réseau de rattachement en fonction de la relation de mise en correspondance.

3. Procédé selon la revendication 1 ou 2, dans lequel le traitement de l'établissement d'une session d'accès avec le système distant comprend :
la réception (s802, s1003), par le SAC, d'un message de négociation pour établir une session d'accès depuis le système distant ;
la mise en correspondance (s805, s1009), par le SAC, du message de négociation avec un message de commande de négociation de session STP et l'envoi (s805) du message de commande de négociation de session STP au SNS ;
la réception (s806, s1015), par le SAC, d'un message de commande de négociation de session STP depuis le SNS ; et
la réponse (s806, s1017), par le SAC, avec un message de négociation pour établir une session d'accès avec le système distant indiquant que la session d'accès a été établie.

4. Procédé selon la revendication 3, comprenant en outre :
l'établissement (s806), par le SAC, de la session STP avec le SNS en fonction du message de commande de négociation de session STP reçu du SNS.

5. Procédé selon la revendication 3, comprenant en outre :
l'acheminement, par le SAC, d'un message de requête d'adresse depuis le système distant vers le SNS ;
l'envoi (s1012), par le SNS, du message de requête d'adresse à un serveur d'adresse ;
la réception (s1013), par le SNS, d'une adresse IP et d'un bail d'adresse attribué au système distant depuis le serveur d'adresse ;
l'établissement, par le SNS, d'une session d'accès du système distant identifié par l'adresse IP et d'une session STP avec le SAC ; et
l'envoi (s1014), par le SNS, d'une réponse au message de commande de négociation de session STP, le message comprenant des paramètres de la session d'accès du système distant et de la session STP.

6. Procédé selon la revendication 5, comprenant en outre :
la détection, par le SAC ou le SNS, du bail d'adresse IP de la session d'accès du système distant ;
l'arrêt, par le SAC ou le SNS, de la session STP si le bail d'adresse IP expire ou le renouvellement du bail d'adresse IP échoue.

7. Procédé selon la revendication 5 ou 6, dans lequel la relation de mise en correspondance entre la session d'accès du système distant et la session STP comprend une liaison de l'adresse IP de la session d'accès, de la session STP et d'un format pour encapsuler un message de données STP.

8. Procédé selon la revendication 1, comprenant en outre :
la réception (s1501), par le SAC, d'un message depuis le système distant ;
la détermination (s1502), par le SAC, d'un type du message ;
la mise en correspondance (s1505, s1508), par le SAC, du message avec un message STP si le message est un message de données qui doit être acheminé par STP ou un message de commande qui ne nécessite pas de traitement local ; et
l'envoi (s1509), par le SAC, du message STP au SNS.

9. Procédé selon la revendication 8, comprenant en outre :
l'exécution (s1507), par le SAC, d'un traitement local sur le message si le message est un message de commande qui nécessite un traitement local ;
le traitement local comprenant :
la réponse, par le SAC, avec un message de Réponse ARP en fonction d'une adresse ou d'une ID de liaison portée dans le message, quand le message de commande est un message de requête de mandataire ARP ; ou
la détermination, par le SAC, de l'état de la session d'accès quand le message est un message d'acquittement de détection d'état.

10. Procédé selon la revendication 1, comprenant en outre :
la réception (s1601), par le SAC, d'un message STP depuis le SNS ;
la détermination (s1602), par le SAC, d'un type du message STP ;
la mise en correspondance (s1603, s1606), par le SAC, du message STP avec un message de communication entre le SAC et le système distant si le message est un message de données ou un message de commande qui ne nécessite pas de traitement local ; et
l'envoi (s1607), par le SAC, du message de communication au système distant.

11. Système d'accès de session de couche 3 comprenant : un système distant, un concentrateur d'accès de session, SAC, et un serveur de réseau de session, SNS, dans lequel :
le concentrateur d'accès de session se trouve dans un réseau d'accès d'un utilisateur,
et est configuré pour établir une session d'accès avec le système distant ; établir une session de Protocole de Transport de Session, STP, avec le SNS dans un réseau de rattachement de l'utilisateur ; établir une relation de mise en correspondance entre la session d'accès du système distant et la session STP et acheminer des messages entre le système distant et le SNS en fonction de la relation de mise en correspondance, le SAC étant configuré pour établir la relation de mise en correspondance d'une ID de session d'accès du système distant, et/ou d'une ID de couche liaison ou de couche physique de la session d'accès, avec un tunnel STP, et une ID de session STP.

12. Système selon la revendication 11, dans lequel le SNS est configuré pour établir une relation de mise en correspondance entre la session d'accès du système distant et la session STP, et acheminer des messages entre le système distant et le réseau de rattachement en fonction de la relation de mise en correspondance.

13. Système selon la revendication 11 ou 12, dans lequel le SAC est configuré en outre pour recevoir un message de négociation pour établir une session d'accès depuis le système distant ; mettre en correspondance le message de négociation avec un message de commande de négociation de session STP ; envoyer le message de commande de négociation de session STP au SNS ; recevoir un message de commande de négociation de session STP depuis le SNS ; et répondre avec un message de négociation pour établir une session d'accès avec le système distant indiquant que la session d'accès a été établie.

14. Système selon la revendication 11 ou 12, dans lequel le SAC est configuré en outre pour recevoir un message depuis le système distant ; déterminer un type du message ; mettre en correspondance le message avec un message STP si le message est un message de données qui doit être acheminé par STP ou un message de commande qui ne nécessite pas de traitement local ; et envoyer le message STP au SNS.

15. Système selon la revendication 11 ou 12, dans lequel le SAC est configuré en outre pour recevoir un message STP depuis le SNS ; déterminer un type du message STP ; mettre en correspondance le message STP avec un message de communication entre le SAC et le système distant si le message est un message de données ou un message de commande qui ne nécessite pas de traitement local ; et envoyer le message de communication au système distant.
